# EUROPÄISCHE PATENTSCHRIFT

(11) **EP 4 232 746 B1**
(45) Veröffentlichungstag und Bekanntmachung des Hinweises auf die Patenterteilung: **06.08.2025**
(21) Anmeldenummer: 21801048.6
(22) Anmeldetag: 22.10.2021
(51) Int. Cl.: F21S 2/00, F21V 23/00, H01M 10/42, H01M 10/48, H01M 50/204, F21L 2/00, F21L 14/00, F21V 23/04, F21V 23/06, F21W 131/107, F21W 131/406, H01M 10/34, H01M 50/256, H01M 50/258, H01M 50/296, H01M 50/502

(54) **SCHEINWERFERSYSTEM UND SCHEINWERFER**
LIGHTING SYSTEM AND LIGHTING UNIT
SYSTÈME D'ÉCLAIRAGE ET UNITÉ D'ÉCLAIRAGE

(30) Priorität: 23.10.2020 DE 102020127949
(43) Veröffentlichungstag der Anmeldung: 30.08.2023
(73) Patentinhaber: Hoffmann, Helge, 89269 Vöhringen (DE); Tobuschat, Hans Ulrich, 89134 Blaustein (DE)
(72) Erfinder: Hoffmann, Helge, 89269 Vöhringen (DE); Tobuschat, Hans Ulrich, 89134 Blaustein (DE)
(74) Vertreter: Baur & Weber Patentanwälte PartG mbB
(86) Internationale Anmeldenummer: PCT/EP2021/079417
(87) Internationale Veröffentlichungsnummer: WO 2022/084541

(56) Entgegenhaltungen:
- WO-A1-2020/077176
- US-A1- 2011 205 752
- US-A1- 2013 038 240

## Beschreibung

Die Erfindung betrifft ein Scheinwerfersystem mit einem als Bühnen- oder Architekturscheinwerfer ausgebildeten Scheinwerfer und einer separaten Akkumulatorvorrichtung als Energiespeicher sowie solch einen Bühnen- oder Architekturscheinwerfer.

Bühnenscheinwerfer werden in der Lichttechnik für Veranstaltungen, insbesondere bei Theater, Konzerten, aber auch Messen oder sonstigen Veranstaltungen eingesetzt. Architekturscheinwerfer werden bei der Objektbeleuchtung, insbesondere von Gebäuden und Denkmälern, eingesetzt. Eventbeleuchtung, bei der auch die Beleuchtung von Hintergrund und Szenerie relevant ist, umfasst Aspekte der Lichttechnik sowohl für Veranstaltungen als auch für Objekte. Gerade bei Freilichtaufführung und Eventbeleuchtungen können die Übergänge im Einsatz von Bühnen- und Architekturscheinwerfern natürlich fließend sein.

In der Lichttechnik für Veranstaltungen und Bühnen sowie Architektur finden Scheinwerfer ein immer breiteres Einsatzgebiet.

Diese Scheinwerfer werden üblicherweise über das Wechselstromnetz gespeist. Zu diesem Zweck müssen entsprechende Zuleitungen vorgesehen sein. Insbesondere bei Eventbeleuchtungen sowie generell bei Scheinwerfern, die entfernt einer Netzversorgungssteckdose platziert sind, geht damit ein erheblicher Aufwand einher.

Außerdem sind Kabelverbindungen oftmals aus Sicherheitsaspekten unerwünscht, da diese Stolperfallen darstellen. Des Weiteren sind sie oftmals auch störend für das Erscheinungsbild einer Lichtinstallation. Diese Nachteile führen dazu, dass bei der Planung einer Veranstaltung bezüglich des Beleuchtungskonzepts häufig Kompromisse eingegangen werden müssen und Lichtdesigner in ihrer Kreativität eingeschränkt werden.

Dies lässt sich umgehen, indem die Speisung der Scheinwerfer über Akkumulatorvorrichtungen erfolgt, welche vor der Veranstaltung geladen werden können und somit die Netzverbindung während der Veranstaltung nicht mehr notwendig ist.

Die Verwendung von Akkumulatorvorrichtungen für Scheinwerfer ist bereits bekannt. So gibt es Scheinwerfer, bei welchen die Akkumulatorvorrichtungen in die Scheinwerfergehäuse integriert sind. Dies führt jedoch mit zunehmender Leistungsfähigkeit der Scheinwerfer zu einer nicht unerheblichen Zunahme der Gehäusegröße und des Scheinwerfergewichts.

Da jedoch nicht bei jedem Einsatz eines Scheinwerfers Akkumulatorbetrieb nötig ist, würde für derartige Fälle insbesondere bei Scheinwerfern höherer Leistung beim Transport zum Veranstaltungsort unnötig Transportgewicht und Transportvolumen generiert, was bei Veranstaltungen mit einer größeren Anzahl an Scheinwerfern die Transportkosten erheblich erhöht.

In der EP 1 975 502 A1 wird ein Scheinwerferleuchtkopf beschrieben, der auf einem Koffer montiert ist, in welchem sich eine Akkumulatorvorrichtung befindet.

In diesem Dokument wird jedoch keine Möglichkeit beschrieben, den Leuchtkopf unabhängig vom Koffer direkt am Wechselspannungsnetz zu betreiben. Somit bleiben die zuvor beschriebenen Nachteile eines Scheinwerfers mit einer im Gehäuse integrierten Akkumulatorvorrichtung bestehen.

Außerdem ist hier für den Betrieb eines Leuchtkopfs genau ein Akkumulatorkoffer vorgesehen.

Die US 2011/0205752 A1 zeigt eine Beleuchtungseinrichtung. Sie umfasst eine Beleuchtungsvorrichtung und ein Gehäuse mit einer oberen Wand, die mit einer unteren Wand verbunden ist. Das Gehäuse hat eine Vorder- und eine Rückseite, und eine Abdeckung ist mit der Rückseite des Gehäuses verbunden. An mindestens einer der Wände des Gehäuses befindet sich mindestens ein Mechanismus zum Verbinden der Beleuchtungsvorrichtung mit einer zweiten Beleuchtungsvorrichtung. Ein Mechanismus zum Halten mindestens einer Leuchtdiode ist mit der Vorderseite des Gehäuses und einer Stromquelle verbunden. An der Mechanik zum Halten der mindestens einen Leuchtdiode ist mindestens eine Leuchtdiode angebracht.

Eine Batteriebaugruppe in einem anderen Zusammenhang, nämlich beispielhaft für einen Rasenmäher, wird in der WO 2020/077176 A1 beschrieben. Die Batteriebaugruppe umfasst ein Gehäuse mit einem Griff, wiederaufladbare Batteriezellen, die im Gehäuse angeordnet sind, und eine Vorrichtung, die so konfiguriert ist, dass sie die Batteriebaugruppe selektiv mit einer Aufnahme eines Leistungsgeräts und/oder einer Ladestation verbindet. Die Vorrichtung umfasst einen Steckverbinder mit mindestens zwei elektrischen Anschlüssen, die elektrisch mit den Batteriezellen verbunden sind, und einen Datenanschluss, der so konfiguriert ist, dass er eine Datenkommunikation zwischen der Batteriebaugruppe und mindestens einem von Leistungsgerät und Ladestation bereitstellt.

Bühnen- und Architekturscheinwerfer sind für unterschiedliche Beleuchtungsanforderungen in einer Vielzahl von Ausführungen mit unterschiedlichen Lichtleistungen und somit auch Leistungsaufnahmen erhältlich.

Bei der Verwendung nur einer externen Akkumulatorvorrichtung für einen Scheinwerfer würde diese für höhere Leistungsklassen aufgrund der Baugröße und des Gewichts sehr unhandlich.

Für Bühnen- und Architekturscheinwerfer können je nach Lichtdesign aufgrund unterschiedlicher Einsatzdauern und Beleuchtungssituationen die Kapazitätsanforderungen an die externe Akkumulatorvorrichtung von Veranstaltung zu Veranstaltung variieren, was vor Beginn einer Veranstaltung während der Planungsphase bereits festgelegt werden kann. Es ist wünschenswert, nur die tatsächlich benötigte Akkumulator-Kapazität zu einem Veranstaltungsort zu transportieren, um die nicht unerheblichen Transportkosten zu minimieren.

Bei der Verwendung nur einer externen Akkumulatorvorrichtung für einen Scheinwerfer müssten somit externe Akkumulatorvorrichtungen unterschiedlicher Kapazität in ausreichender Menge vorgehalten werden, was zu einem erhöhten Lagerbestand an Akkumulatorvorrichtungen und einem erhöhten Aufwand bei der Planungslogistik für Veranstaltungen führt.

Weiterhin ist es für Bühnen- und Architekturscheinwerfer sinnvoll, eine Information über den Ladezustand der externen Akkumulatorvorrichtung zu erhalten. Somit könnte der Scheinwerfer bei verringertem Ladezustand beispielsweise in einen Energiesparmodus versetzt werden.

Auch dies wird in dem oben angeführten Dokument nicht adressiert. Ebenfalls werden hier auch intelligente Konzepte zum gleichzeitigen Laden mehrerer Ackumulatorvorrichtungen nicht thematisiert.

Es stellt sich die Aufgabe, eine alternative Anordnung vorzusehen, welche die zuvor beschriebenen Nachteile nicht aufweist.

Die Aufgabe wird gelöst durch ein Scheinwerfersystem mit den Merkmalen des Anspruchs 1 und einen entsprechenden Scheinwerfer.

Das Scheinwerfersystem umfasst einen Scheinwerfer, ausgebildet als Bühnen- oder Architekturscheinwerfer, der mindestens eine erste Versorgungsschnittstelle für eine externe Netzversorgung und mindestens eine zweite Versorgungsschnittstelle für eine externe Akkumulatorversorgung aufweist, und eine externe Akkumulatorvorrichtung mit mindestens einer Akkumulatorschnittstelle zur Bereitstellung einer Versorgungsspannung für den Scheinwerfer, die mit der zweiten Versorgungsschnittstelle verbindbar oder verbunden ist. Die zweite Versorgungsschnittstelle und die Akkumulatorschnittstelle sind für eine Datenkommunikation von der Akkumulatorvorrichtung zum Scheinwerfer ausgebildet.

Durch das Vorsehen der ersten Versorgungsschnittstelle für die externe Netzversorgung und der zweiten Versorgungsschnittstelle für die externe Akkumulatorversorgung ist der Scheinwerfer flexibel einsetzbar. Er kann entweder durch die externe Netzversorgung, unter die auch das umgangssprachliche Stromnetz fällt, oder die Akkumulatorvorrichtung versorgt werden. Die Akkumulatorvorrichtung ist nicht Teil des Scheinwerfers und kann wegen der Lösbarkeit der Verbindung zwischen dem Scheinwerfer und der Akkumulatorvorrichtung für verschiedene Scheinwerfer und Scheinwerfertypen eingesetzt werden. Die Verbindung kann durch geeignete Mittel, z. B. Kabel oder Steckerbrücken, oder direkt erfolgen. In letztgenanntem Fall greifen die Schnittstellen von dem Scheinwerfer und der Akkumulatorvorrichtung direkt ineinander, um die elektrisch leitende Verbindung herzustellen.

Es sei bemerkt, dass die zweite Versorgungsschnittstelle und die Akkumulatorschnittstelle einer Ausführung elektrisch leitend verbindbar oder verbunden sein können. In einer alternativen Ausführung können sie sowohl elektrisch leitend als auch über Funk verbindbar oder verbunden sein. Nichtsdestotrotz sind auch andere Verbindungen möglich, insbesondere sind andere Wege der Energieübertragung denkbar, beispielsweise induktiv.

Die zweite Versorgungsschnittstelle und die Akkumulatorschnittstelle müssen nicht notwendigerweise jeweils durch nur einen Steckverbinder, sei es Stecker oder Buchse, kontaktiert werden. Es ist auch denkbar, mehrere Steckverbinder zur Kontaktierung derselben Schnittstelle oder eine zumindest teilweise drahtlose Verbindung vorzusehen. In einer Ausführung erfolgt die Energieversorgung durch eine elektrisch leitende Verbindung und die Datenübertragung über eine elektrisch leitende Verbindung oder über eine Funkverbindung. Beispielsweise kann die Energieversorgung über ein Kabel mit zwei endseitigen Steckverbindern erfolgen, und die Datenübertragung kann über ein weiteres Kabel mit zwei endseitigen Steckverbindern erfolgen. Alternativ kann die Datenübertragung drahtlos, nämlich über eine Funkverbindung, erfolgen. Nichtsdestotrotz ist die Verbindung mit genau einem Steckverbinder an jeder der Schnittstellen bevorzugt.

Die Akkumulatorvorrichtung umfasst eine oder üblicherweise eine Mehrzahl von Akkumulatorzellen, die die ganze beziehungsweise jeweils einen Teil der ackumulatorvorrichtungsinternen Versorgungsspannung bereitstellen. Die Spannungen der Akkumulatorzellen summieren sich zu der akkumulatorvorrichtungsinternen Versorgungsspannung. Die Akkumulatorzellen sind sinnvollerweise in mehreren Gruppen zusammengefasst. Für mehrere zu einer Gruppe zusammengeschaltete Akkumulatorzellen ist die Bezeichnung "Akkupack" oder "Ackumulator-Pack" gebräuchlich. Die Akkumulatorvorrichtung weist neben den Akkumulatorzellen auch ein Modul für die Kommunikation mit dem Scheinwerfer und sinnvollerweise weitere Baugruppen wie Prozessoren und Bausteine zum Akkumulatorzellenmanagement, Spannungsregler, Ladelektronik, auf, um die Funktionalität der Akkumulatorvorrichtung bereitzustellen. Die Spannungsregler ermöglichen die Bereitstellung einer geregelten Versorgungsspannung für den Scheinwerfer und auch für die interne Spannungsversorgung der Akkumulatorvorrichtung.

Das Aufladen der Akkumulatorvorrichtung kann durch ein externes Ladegerät oder mittelbar durch den netzspannungsversorgten Scheinwerfer erfolgen. Die Akkumulatorvorrichtung umfasst in einer Ausführung Ladeelektronik für Akkumulatorzellen, z. B. mit einem Ladestromregler. Bei solch einer Ausführung wird beim Aufladen durch das externe Ladegerät oder den Scheinwerfer lediglich eine Versorgungsspannung für die Ladeelektronik in der Akkumulatorvorrichtung bereitgestellt. Alternativ kann der Ladevorgang auch komplett durch das externe Ladegerät oder den Scheinwerfer erfolgen, wobei die Ladeelektronik, wie z. B. der Ladestromregler, im externem Ladegerät oder Scheinwerfer vorgesehen ist.

Vorteilhafterweise ist der Scheinwerfer ausgebildet, zwischen der Netzversorgung mittels der ersten Versorgungsschnittstelle und der Akkumulatorversorgung mittels der zweiten Versorgungsschnittstelle umzuschalten. Er kann detektieren, ob an den Versorgungsschnittstellen eine Versorgungsspannung anliegt. Falls dieses nur bei einer der Versorgungsschnittstellen der Fall ist, erfolgt die Energieversorgung über diese. Beim Anlegen von Versorgungsspannungen an beide Versorgungsschnittstellen kann die Energieversorgung über eine der Versorgungsschnittstellen, üblicherweise die erste, priorisiert werden. Vorteilhafterweise werden unterschiedliche Versorgungsspannungen an die erste und zweite Versorgungsschnittstelle angelegt. Die Netzspannung kann beispielsweise 230V betragen und ist damit größer als die durch die Akkumulatorvorrichtung bereitgestellte Versorgungsspannung des Scheinwerfers, welche beispielsweise bei ca. 48V liegen kann. Fällt die von der Akkumulatorvorrichtung bereitgestellte akkumulatorvorrichtungsinterne Betriebsspannung unter einen festgelegten Abschaltwert, welcher zum Schutz der Akkumulatorzellen in Abhängigkeit der verwendeten Akkumulatorentechnologie definiert wird, kommt es zur Abschaltung der Versorgungsspannung für den Scheinwerfer. Bei Verwendung von mehreren Versorgungsspannungen können für diese auch unterschiedliche Abschaltspannungen definiert sein, damit die Versorgung der Steuerelektronik des Scheinwerfers noch für einen bestimmten Zeitraum nach Abschalten der Versorgungsspannung für die Leistungselektronik des Scheinwerfers aufrechterhalten werden kann. Die von den komplett aufgeladenen Akkumulatorzellen bereitgestellte akkumulatorvorrichtungsinterne Betriebsspannung liegt somit erheblich höher als die von der Akkumulatorvorrichtung bereitgestellte Versorgungsspannung. Ein typischer Wert für eine von den komplett aufgeladenen Akkumulatorzellen bereitgestellte akkumulatorvorrichtungsinterne Betriebsspannung beträgt ca. 65V.

Die zweite Versorgungsschnittstelle des Scheinwerfers und die Akkumulatorschnittstelle haben eine Doppelfunktion, denn sie ermöglichen nicht nur die Energieversorgung des Scheinwerfers, sondern auch eine Datenkommunikation zumindest von der Akkumulatorvorrichtung zum Scheinwerfer. Vorteilhafterweise ist die Kommunikation auch in Gegenrichtung möglich, sodass eine Datenkommunikation zwischen Akkumulatorvorrichtung und Scheinwerfer in beide Richtungen, d.h. bidirektional, erfolgen kann. Die Schnittstellenfunktion zur Datenkommunikation zwischen Akkumulatorvorrichtung und Scheinwerfer sowie gegebenenfalls zwischen einer beliebigen Kombination aus einer oder mehreren Akkumulatorvorrichtungen und einem oder mehreren Scheinwerfern kann beispielsweise bedrahtet, über Lichtleiter oder auch durch Funk, z. B. WLAN oder Bluetooth, ausgebildet sein. Die bidirektionale Datenkommunikation ermöglicht, dass der Scheinwerfer die Akkumulatorvorrichtung steuern kann. Die Versorgungsfunktion der zweiten Versorgungsschnittstelle kann in mehrere Spannungsversorgungen aufgeteilt sein, beispielsweise getrennte Versorgungen für Leistungselektronik und Steuerelektronik. Dies erleichtert die Realisierung von Energiesparmodi, bei denen eine der Versorgungen ausgeschaltet wird.

Bühnenscheinwerfer werden in der Lichttechnik für Veranstaltungen, insbesondere bei Theater, Konzerten, aber auch Messen, eingesetzt. Architekturscheinwerfer werden bei der Objektbeleuchtung, insbesondere von Gebäuden und Denkmälern, eingesetzt. Wenn diese Scheinwerfer für den Außeneinsatz vorgesehen sind, sind sie vorteilhafterweise zumindest spritzwassergeschützt ausgeführt. Die Scheinwerfer können bewegtes Licht oder statisches Licht abstrahlen. Beim bewegten Licht wird die Lichtabstrahlungsrichtung, üblicherweise mittels Motoren, während des Betriebs verändert, beispielsweise indem der Scheinwerferkopf durch Motoren bewegt wird oder eine bewegte Optik vor dem Strahlengang die Abstrahlcharakteristik beeinflusst. Beim statischen Licht erfolgt die Einstellung üblicherweise manuell und wird während des Betriebs nicht mehr verändert. Der Bühnen- oder Architekturscheinwerfer kann beispielsweise als kopfbewegter oder statischer Scheinwerfer ausgebildet sein. Ein kopfbewegter Scheinwerfer für bewegtes Licht, auch als Movinghead-Scheinwerfer oder Movinglight-Scheinwerfer bezeichnet, umfasst einen Sockel, einen Bügel und einen Kopf als drehbar miteinander verbundene Baugruppen, die das Schwenken des Kopfes um in der Regel zwei Achsen ermöglichen. Der Bügel als Verbindungsglied zwischen Kopf und Sockel ist drehbar mit dem Sockel verbunden. Der Kopf ist drehbar mit dem Bügel verbunden. Die Drehachsen sind winkelig, vorteilhafterweise rechtwinkelig, zueinander ausgerichtet, sodass der Kopf dreh- und schwenkbar zum Sockel ist. Durch diese Konstruktion erhält man eine sehr hohe Bewegungsfreiheit, sodass man das Licht des Scheinwerfers im Rahmen seiner mechanischen Bewegungsfreiheit abhängig vom Ort der Aufhängung oder des Aufstellens nahezu überall hin ausrichten kann. Solche kopfbewegten Scheinwerfer haben Motoren, mittels derer Kopf und Bügel bewegt werden. Bei statischen Scheinwerfern erfolgt die Ausrichtung in ihrer Halterung manuell.

In einer Ausführung weist der Scheinwerfer zumindest eine weitere zweite Versorgungsschnittstelle für eine weitere externe Akkumulatorversorgung auf, sodass im laufenden Betrieb die Akkumulatorversorgung an einer der zweiten Versorgungsschnittstellen ausgetauscht werden kann. Bei solch einer Ausführung sind an sämtlichen zweiten Versorgungsschnittstellen Akkumulatorvorrichtungen gleichzeitig anschließbar.

In einer Ausführung ist der Scheinwerfer mit zumindest einem weiteren Scheinwerfer, der als Bühnen- oder Architekturscheinwerfer ausgebildet ist, koppelbar, sodass die Scheinwerfer von derselben externen Akkumulatorversorgung gespeist werden. Die Kopplung der Scheinwerfer kann beispielsweise mittels der zweiten Versorgungsschnittstellen erfolgen, wenn mehrere an den Scheinwerfern vorgesehen sind. So können mehrere Scheinwerfer kaskadiert werden, von denen nur einer direkt an eine Akkumulatorversorgung angeschlossen ist. Auf diese Weise können mit einer Akkumulatorvorrichtung mittels Kaskadierung auch mehrere Scheinwerfer, gegebenenfalls mit reduzierter Helligkeit, versorgt werden. Die kaskadierten Scheinwerfer werden auch als Scheinwerferkette bezeichnet.

In einer Ausführung hat die Akkumulatorvorrichtung zumindest zwei Akkumulatorschnittstellen. Vorteilhafterweise sind an diesen Schnittstellen entweder mehrere Scheinwerfer oder eine beliebige Kombination aus Scheinwerfern und weiteren Akkumulatorvorrichtungen anschließbar, sodass die Geräte über die entsprechenden Schnittstellen miteinander verbindbar sind. In einer Ausführung hat die Akkumulatorvorrichtung zumindest zwei Akkumulatorschnittstellen.

Im Scheinwerfersystem können vorteilhafterweise mehrere Akkumulatorvorrichtungen vorgesehen sein, die kaskadiert miteinander verbunden sind, um den Betrieb des Scheinwerfers zu verlängern. Die Mehrzahl von Akkumulatorvorrichtungen umfasst die oben beschriebene Akkumulatorvorrichtung und weitere davon. Bei der Kaskadierung werden mehrere Akkumulatorvorrichtungen hintereinandergeschaltet. Die kaskadierten Akkumulatorvorrichtungen werden auch als Akkumulatorvorrichtungskette bezeichnet. Die Akkumulatorschnittstellen ermöglichen zumindest eine Datenkommunikation von allen kaskadierten Akkumulatorvorrichtungen zum Scheinwerfer oder zu allen kaskadierten Scheinwerfern. Vorteilhafterweise ist die Kommunikation auch in Gegenrichtung sowie zwischen allen kaskadierten Akkumulatorvorrichtungen und allen kaskadierten Scheinwerfern möglich. Die Kaskadierung der Akkumulatorvorrichtungen erfolgt, indem eine weitere Schnittstelle der Akkumulatorvorrichtung mit der Akkumulatorschnittstelle einer weiteren Akkumulatorvorrichtung verbunden wird. Deren weitere Schnittstelle kann dann mit der Akkumulatorschnittstelle noch einer weiteren Akkumulatorvorrichtung verbunden werden, und so weiter. Die weitere Schnittstelle ist zu einer Datenkommunikation zwischen den Akkumulatorvorrichtungen, insbesondere zu einer Datenkommunikation mit der Ackumulatorschnittstelle einer anderen Akkumulatorvorrichtung, ausgebildet. Vorteilhafterweise ist die weitere Schnittstelle ebenfalls als Akkumulatorschnittstelle ausgebildet.

Natürlich kann eine Akkumulatorvorrichtungskette auch zur Energieversorgung mehrerer gekoppelter Scheinwerfer verwendet werden. Statt an die zweiten Schnittstellen eines oder mehrerer Scheinwerfer jeweils nur eine Akkumulatorvorrichtung zu koppeln, wie oben beschrieben, können auch Akkumulatorvorrichtungsketten an die zweiten Schnittstellen eines oder mehrerer Scheinwerfer gekoppelt werden. Dies ermöglicht eine längere Betriebsdauer und im Betrieb eine oder mehrere Akkumulatorvorrichtungen auszutauschen, wodurch der Betrieb zusätzlich verlängert werden kann. Während des Scheinwerferbetriebs kann der Scheinwerfer mit einer weiteren Akkumulatorvorrichtungskette verbunden werden, um einen kontinuierlichen Scheinwerferbetrieb zu gewährleisten, beispielsweise wenn bei niedrigem Ladezustand die bisher verwendete Akkumulatorvorrichtungskette zum Aufladen entnommen wird.

Durch die Kaskadierung von Akkumulatorvorrichtungen in Akkumulatorvorrichtungsketten lassen sich mit einem Typ oder mit einer geringen Anzahl mehrerer Typen Akkumulatorvorrichtungen diverse Anwendungsanforderungen mit unterschiedlich leistungsfähigen Scheinwerfern abdecken.

Vorteilhafterweise ist die Akkumulatorvorrichtung als Nickel-Metallhydrid-Akkumulatorvorrichtung ausgebildet, die robust ist und eine hohe Energiedichte hat.

Vorteilhafterweise umfasst die Datenkommunikation die Bereitstellung von Zustandsinformationen über die Akkumulatorvorrichtung oder die Mehrzahl von Akkumulatorvorrichtungen, anhand derer der Scheinwerfer seine Versorgung steuern oder regeln kann. Die Zustandsinformationen können Informationen über den Ladezustand oder mögliche Defekte von Akkumulatorzellen umfassen. Sie können Schätzungen über die voraussichtliche Betriebsdauer erlauben. Am Scheinwerfer kann eine Anzeigevorrichtung für die Ausgabe der Zustandsinformation, z. B. Ladezustände, Defekte, voraussichtliche Betriebsdauer, vorgesehen sein, sodass sich der schaltungstechnische Aufwand für die visuelle Bereitstellung der Zustandsinformation auf den Scheinwerfer konzentriert. Der Scheinwerfer kann eine Benutzerschnittstelle, z. B. Tastfeld oder Tastenfeld, für die Steuerung des Scheinwerfers haben. Mit dieser ist auch eine Steuerung der Anzeigevorrichtung oder des Ladevorgangs für eine oder mehrere Akkumulatorvorrichtungen möglich. Weitere Schnittstellen, beispielsweise für die Ansteuerung des Scheinwerfers sind denkbar.

In der Akkumulatorvorrichtung ist vorteilhafterweise eine Datenverarbeitungseinheit (CPU) zur Überwachung des Akkumulatorvorrichtungszustands sowie zur Kommunikation mit dem Scheinwerfer vorgesehen. Im Scheinwerfer ist eine Datenverarbeitungseinheit vorgesehen, mittels der sowohl die Kommunikation als auch die Steuerung der Akkumulatorvorrichtungen und des Ladevorgangs erfolgen kann. Beim Laden mittels Scheinwerfer ist dessen erste Versorgungsschnittstelle mit dem Stromnetz verbunden, und der Scheinwerfer kommuniziert über die Datenschnittstellenfunktion der zweiten Versorgungsschnittstelle mit den Akkumulatorvorrichtungen.

Bei einer Ausführung mit drahtloser Datenübertragung weist die Akkumulatorvorrichtung ein Akkumulatorvorrichtung-Funkmodul zur Datenkommunikation von der Akkumulatorvorrichtung zum Scheinwerfer oder zu einem externen Überwachungsgerät auf. Die Datenkommunikation kann bidirektional sein. Zusätzlich oder alternativ weist der Scheinwerfer ein Scheinwerfer-Funkmodul zur Datenkommunikation von der Akkumulatorvorrichtung zum Scheinwerfer oder zu einem externen Überwachungsgerät auf. Die Datenkommunikation kann bidirektional sein. Die Funkmodule sind ausgebildet zur Übermittlung von Betriebsparametern, z. B. Ladezustand der Akkumulatorvorrichtung, an das Überwachungsgerät, das zentral mehrere Geräte überwachen und mit ihnen kommunizieren kann. Das Überwachungsgerät kann beispielsweise als App auf einem Smartphone oder Tablet oder als Lichtsteuerpult ausgebildet sein. Solch ein Überwachungsgerät für mehrere Scheinwerfersysteme ist vorteilhaft bei Veranstaltungen mit mehreren Scheinwerfern im Akkumulatorbetrieb. Die Übermittlung von Betriebsparametern kann in einer Ausführung über Schnittstellen des Scheinwerfers, z. B. mittels konventioneller Kommunikationsschnittstellen und Protokollen des Scheinwerfers, wie Netzwerk, Wireless DMX/RDM, WLAN, Bluetooth, ACN, SACN, ArtNet, erfolgen. Vorteilhafterweise ist die Übermittlung der Daten zum Überwachungsgerät drahtlos, sodass keine Kabelverbindung benötigt wird. Vorteilhafterweise kann das Überwachungsgerät die überwachten Geräte auch steuern, sodass es die Funktion eines Überwachungs- und Steuergeräts hat.

Eine Datenschnittstelle kann ebenfalls am externen Ladegerät vorgesehen sein, das beim Laden über diese Datenschnittstelle mit den Akkumulatorvorrichtungen kommuniziert.

Kommunikation während des Ladevorgangs ermöglicht intelligentes Laden von mehreren verbundenen Akkumulatorvorrichtungen unter Ausnutzung der maximalen Ladeleistung des Ladegeräts, da das Ladegerät ausgebildet ist, mit den Akkumulatorvorrichtungen über die Datenschnittstellenfunktion zu kommunizieren.

Vorteilhafterweise umfasst die Akkumulatorvorrichtung eine Signalisierungsvorrichtung für die Informationen, wie z. B. Ladezustand und Fehlersignalisierung. Die Signalisierungsvorrichtung kann als einfache Anzeigeneinheit zur Darstellung des Ladezustands ausgebildet sein, z. B. als LED-Band. Optional kann ein Taster zur Aktivierung der Signalisierungsvorrichtung vorgesehen sein. Der Taster kann multifunktional sein und zusätzlich beispielsweise zum Start des Kopplungsvorgangs mit dem Scheinwerfer ausgebildet sein.

Vorteilhafterweise ist die Akkumulatorvorrichtung robust, kompakt und/oder spritzwassergeschützt ausgebildet. Vorteilhafterweise hat jede Akkumulatorvorrichtung eine Tragevorrichtung, beispielsweise in Form eines oder mehrerer Griffe. Es kann zusätzlich oder alternativ eine Halte- und/oder Transportvorrichtung für mehrere Akkumulatorvorrichtungen, beispielsweise in Form eines Tragekorbs, Gestells oder Flightcase, vorgesehen sein.

Vorteilhafterweise ist die Akkumulatorvorrichtung ausgebildet, sodass sie auf einer weiteren Akkumulatorvorrichtung stapelbar ist. Der Scheinwerfer ist ausgebildet, sodass er auf der Akkumulatorvorrichtung stapelbar ist. Mit anderen Worten: Die Akkumulatorvorrichtung ist so ausgebildet, dass sie unter den Scheinwerfer gestellt werden kann. In einer Ausführung sind der Scheinwerfer und die Akkumulatorvorrichtung verriegelbar, sodass das Scheinwerfersystem hängend betrieben werden kann.

Nachfolgend werden einige Ausführungsbeispiele anhand der Zeichnung näher erläutert. Es zeigen:
- Figur 1: ein Ausführungsbeispiel eines Scheinwerfersystems mit einem kopfbewegten Scheinwerfer und einer Akkumulatorvorrichtung,
- Figur 2: das Ausführungsbeispiel des Scheinwerfersystems mit dem kopfbewegten Scheinwerfer und der Akkumulatorvorrichtung aus Figur 1 mit weiteren Details,
- Figur 3: ein weiteres Ausführungsbeispiel eines Scheinwerfersystems,
- Figur 4: ein weiteres Ausführungsbeispiel eines Scheinwerfersystems,
- Figur 5: ein Ausführungsbeispiel einer Mehrzahl von Akkumulatorvorrichtungen,
- Figur 6: ein weiteres Ausführungsbeispiel einer Mehrzahl von Akkumulatorvorrichtungen, und
- Figur 7: ein weiteres Ausführungsbeispiel eines Scheinwerfersystems.

In den Figuren sind gleiche oder funktional gleichwirkende Bauteile oder Merkmale mit den gleichen Bezugszeichen versehen.

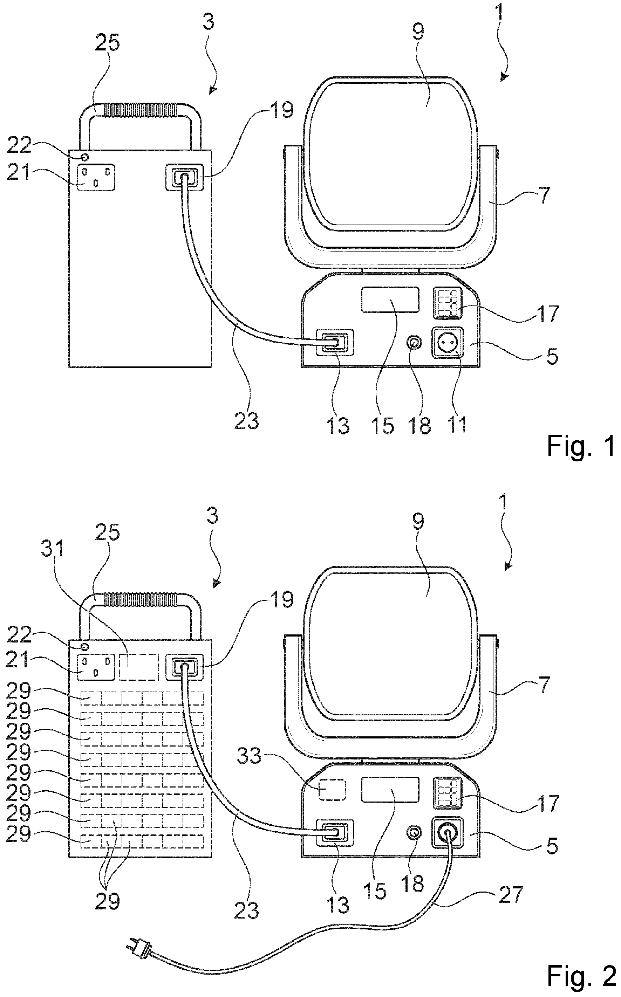

Figur 1 zeigt ein Ausführungsbeispiel eines Scheinwerfersystems mit einem als Bühnen- oder Architekturscheinwerfer ausgebildeten Scheinwerfer. Er ist ausgebildet als kopfbewegter Scheinwerfer 1. Gerade in der Bühnentechnik sind solche kofbewegten Scheinwerfer 1 verbreitet. Das Scheinwerfersystem umfasst ferner eine Akkumulatorvorrichtung 3.

Der Scheinwerfer 1 umfasst einen Sockel 5, einen Bügel 7 und einen Kopf 9. Diese drehbar miteinander verbundenen Baugruppen ermöglichen das Schwenken des Kopfes 9 um zwei Achsen. Im Sockel 5 sind die Anschlüsse und eine Antriebsmechanik im Bügel 7 untergebracht. Der Bügel 7 als Verbindungsglied zwischen Kopf 9 und Sockel 5 ist drehbar mit dem Sockel 5 verbunden. Der Kopf 9 ist drehbar mit dem Bügel 7 verbunden. Die Drehachsen sind rechtwinkelig zueinander ausgerichtet. Der Kopf 9 umfasst eine Projektionseinheit des Scheinwerfers 1 und beherbergt Lampe und Optik sowie optional Farb- und Goboräder und Effektfilter. Der Kopf 9 führt eine Schwenkbewegung relativ zum Bügel 7 aus.

Der Scheinwerfer 1 umfasst ferner eine erste Versorgungsschnittstelle 11 für eine externe Netzversorgung und eine zweite Versorgungsschnittstelle 13 für eine externe Akkumulatorversorgung. Externe Versorgung bedeutet, dass die Energiequelle nicht Teil des Scheinwerfers ist, sondern elektrisch leitend mit dem Scheinwerfer über die Schnittstellen verbunden werden kann. In diesem Ausführungsbeispiel sind sowohl die erste Versorgungsschnittstelle 11 als auch die zweite Versorgungsschnittstelle 13 als Buchse im Sockel 5 ausgebildet. Alternativ kann ein Stecker, ggf. an einer kabelförmigen Verlängerung (nicht dargestellt), als Schnittstelle ausgebildet sein. Mittels eines Steckers sind in diesem Ausführungsbeispiel Versorgungs- oder Verbindungsleitungen an die als Buchsen ausgebildeten Versorgungsschnittstellen anschließbar.

Im Sockel 5 sind ferner eine Anzeigevorrichtung 15 und eine Benutzerschnittstelle 17, die in diesem Ausführungsbeispiel als Tastenfeld ausgebildet ist, vorgesehen. Alternative Ausführungen, beispielsweise als Tastfeld, auch als Touchpad bezeichnet, sind denkbar. Ferner weist der Scheinwerfer 1 eine optionale Datenschnittstelle 18 auf, mittels der er von einem externen Gerät ansteuerbar ist. Die Datenschnittstelle 18 kann als Draht- oder Funkschnittstelle, z. B. mittels WLAN oder Bluetooth, ausgebildet sein. Über die Datenschnittstelle 18 kann die Steuerung des Scheinwerfers 1 mittels einer App, z. B. auf einem Mobiltelefon oder Smartphone, oder eines Steuerpultes erfolgen. Über die Datenschnittstelle 18 kann externen Geräten Informationen über die Akkumulatorvorrichtung 3, z. B. ihr Ladezustand oder Fehlermeldungen, bereitgestellt werden. Wenn eine Datenschnittstelle 18 vorsehen ist, sind Anzeigevorrichtung 15 und Benutzerschnittstelle 17 entbehrlich.

Der Scheinwerfer 1 umfasst ein Netzteil im Sockel 5, um aus der extern anliegenden Versorgungsspannung eine scheinwerferinterne Versorgungsspannung zu generieren. Der Scheinwerfer 1 detektiert, ob an den Versorgungsschnittstellen 11, 13 eine Versorgungsspannung anliegt. Falls dieses nur bei einer der Versorgungsschnittstellen 11, 13 der Fall ist, erfolgt die Energieversorgung über diese. Beim Anlegen von Versorgungsspannungen an beide Versorgungsschnittstellen 11, 13 wird sinnvollerweise die Netzversorgung gewählt, um die Akkumulatorvorrichtung 3 zu schonen und gegebenenfalls zu laden. Die Versorgungsspannungen an den Versorgungsschnittstellen 11, 13 unterscheiden sich in der Regel. Die Netzspannung kann beispielsweise 230V betragen. Die von der Akkumulatorvorrichtung 3 bereitgestellte Versorgungsspannung liegt üblicherweise darunter, muss jedoch zum Betrieb des Scheinwerfers 1 ausreichend sein. Bei Verwendung einer Spannungsregelung in der Akkumulatorvorrichtung wird diese beispielsweise auf ca. 48V stabilisiert. Für den Betrieb der Akkumulatorvorrichtung ist eine akkumulatorvorrichtungsinterne Betriebsspannung erforderlich, welche von den kaskadierten Akkupacks zur Verfügung gestellt wird. Diese variiert in Abhängigkeit des Ladezustands der Akkumulatorzellen. Diese wird üblicherweise so festgelegt, dass die Bereitstellung der Versorgungsspannung bis zum Erreichen der maximal zulässigen Entladung der Ackumulatorzellen (üblicherweise ca. 1,1V je Akkumulatorzelle bei NiMh Akkumulatoren) gewährleistet ist. Bei Verwendung von NiMh Akkumulatoren würde dies im aktuellen Beispiel dazu führen, dass die akkumulatorvorrichtungsinterne Betriebsspannung je nach Ladezustand der Akkumulatorzellen zwischen ca. 53V und 65V variiert. Bei Unterschreiten von 53V würde sinnvollerweise die Bereitstellung der Leistungsversorgung für den Scheinwerfer eingestellt.

Die Akkumulatorvorrichtung 3 umfasst eine Akkumulatorschnittstelle 19 zur Bereitstellung der Versorgungsspannung für den Scheinwerfer 1 sowie eine weitere Schnittstelle 21, die eine kaskadierte Verbindung mit weiteren Akkumulatorvorrichtungen (in Figur 1 nicht dargestellt) ermöglicht. Die weitere Schnittstelle ist als weitere Akkumulatorschnittstelle 21 ausgebildet.

Die Akkumulatorschnittstelle 19 ist mittels eines Kabels 23 mit der zweiten Versorgungsschnittstelle 13 des Scheinwerfers 1 verbunden, um diesen mit der von der Akkumulatorvorrichtung 3 bereit gestellten Versorgungsspannung zu versorgen. Über diese Schnittstellen 19, 13 erfolgt auch die Kommunikation zwischen dem Scheinwerfer 1 und der Akkumulatorvorrichtung 3.

Zustandsinformationen über die Akkumulatorvorrichtung 3, beispielsweise ihr Ladezustand oder Fehlermeldungen, können in der Anzeigevorrichtung 15 angezeigt werden. Die Benutzerschnittstelle 17 erlaubt sowohl die Ansteuerung des Scheinwerfers 1 als auch der Akkumulatorvorrichtung 3. Ferner weist die Akkumulatorvorrichtung 3 zumindest eine als Signalisierungsleuchte ausgebildete Signalisierungsvorrichtung 22 auf, die beispielsweise als LED ausgebildet sein kann. Die Signalisierungsleuchte zeigt Fehler oder Defekte an, wenn sie leuchtet. In einem Ausführungsbeispiel können zwei Signalisierungsleuchten unterschiedlicher Farbe vorgesehen sein. Eine Farbe zeigt einen normalen Betriebsmodus an, und die andere Farbe zeigt den Defekt- oder Fehlerfall an. Details über den durch die Signalisierungsleuchte angezeigte Zustand können am Scheinwerfer 1 oder an einem externen Gerät angezeigt werden.

Die Akkumulatorvorrichtung 3 hat einen an ihrer Oberseite angebrachten Tragegriff 25, um den Transport zu erleichtern.

Das beschriebene Scheinwerfersystem erlaubt die Positionierung und Betrieb des Scheinwerfers 1 unabhängig der Netzversorgung. Dies ist beispielsweise bei Open-Air-Veranstaltungen von Vorteil. Gerade wenn nur wenige Scheinwerfer abseits Netzversorgung benötigt werden, lässt sich durch Scheinwerfersysteme in einfacher Weise die gewünschte Ausleuchtung bereitstellen.

Figur 2 zeigt das zuvor beschriebene Ausführungsbeispiel mit weiteren Details. Die Beschreibung konzentriert sich zur Vermeidung von Wiederholungen auf diese.

In der ersten Versorgungsschnittstelle 11 ist ein Versorgungskabel 27 zum Anschluss an das Netz eingesteckt. Es ist jedoch nicht angeschlossen. Sobald dieses angeschlossen ist, detektiert der Scheinwerfer 1, dass sowohl von der Akkumulatorvorrichtung 3 als auch von der Netzversorgung eine Versorgungsspannung bereitgestellt wird. In diesem Fall würde die Energieversorgung über das Netz erfolgen, um die Akkumulatorvorrichtung 3 zu schonen und sie gegebenenfalls zu laden.

Die Akkumulatorvorrichtung 3 umfasst eine Mehrzahl von Akkumulatorzellen 29, die jeweils einen Teil der akkumulatorvorrichtungsinternen Betriebsspannung bereitstellen. Die Akkumulatorzellen 29 sind in Gruppen zusammengefasst. Im Ausführungsbeispiel weist die Akkumulatorvorrichtung 3 acht Gruppen mit jeweils sechs Akkumulatorzellen 29 auf. In diesem Ausführungsbeispiel kann jede Akkumulatorzelle ca. 1,5V bereitstellen. Insgesamt ist die vollgeladene Akkumulatorvorrichtung 3 in der Lage in diesem Ausführungsbeispiel ca. 65V bereitzustellen.

Die Akkumulatorvorrichtung 3 umfasst eine Datenverarbeitungseinheit (CPU) 31, die geeignet ist, sowohl die Akkumulatorzellen 29 während des Versorgungsvorgangs und des Aufladevorgangs anzusteuern und zu überwachen als auch Zustandsinformationen für den Scheinwerfer 1 über die Akkumulatorschnittstelle 19 und der in der Akkumulatorvorrichtung integrierten Signalisierungsvorrichtung 22 bereitzustellen. Solche Zustandsinformationen können beispielsweise den Ladezustand der Akkumulatorvorrichtung 3 betreffen oder Informationen darüber, ob eine oder mehrere der Akkumulatorzellen 29 defekt sind und, falls dem so ist, welche defekt sind. Auch Fehlermeldungen und Warnungen, z. B. "zu geringer Ladestand" oder "Überhitzung", können bereitgestellt werden. Das Aufladen kann über die Akkumulatorschnittstelle 19 oder die weitere Akkumulatorschnittstelle 21 oder noch eine weitere, zu diesem Zweck vorgesehene Schnittstelle erfolgen. Bei mit dem Scheinwerfer 1 verbundener Ackumulatorvorrichtung 3 kann das Aufladen über den Scheinwerfer 1 und die Akkumulatorschnittstelle 19 erfolgen, wenn der Scheinwerfer 1 durch die externe Netzversorgung versorgt wird.

Auch im Scheinwerfer 1 ist eine Datenverarbeitungseinheit (CPU) 33 vorgesehen, welche mit der Datenverarbeitungseinheit 31 der Akkumulatorvorrichtung 3 über die Schnittstellen 13, 19 kommuniziert. Die Zustandsinformationen der Ackumulatorvorrichtung 3 werden in der Anzeigevorrichtung 15 angezeigt.

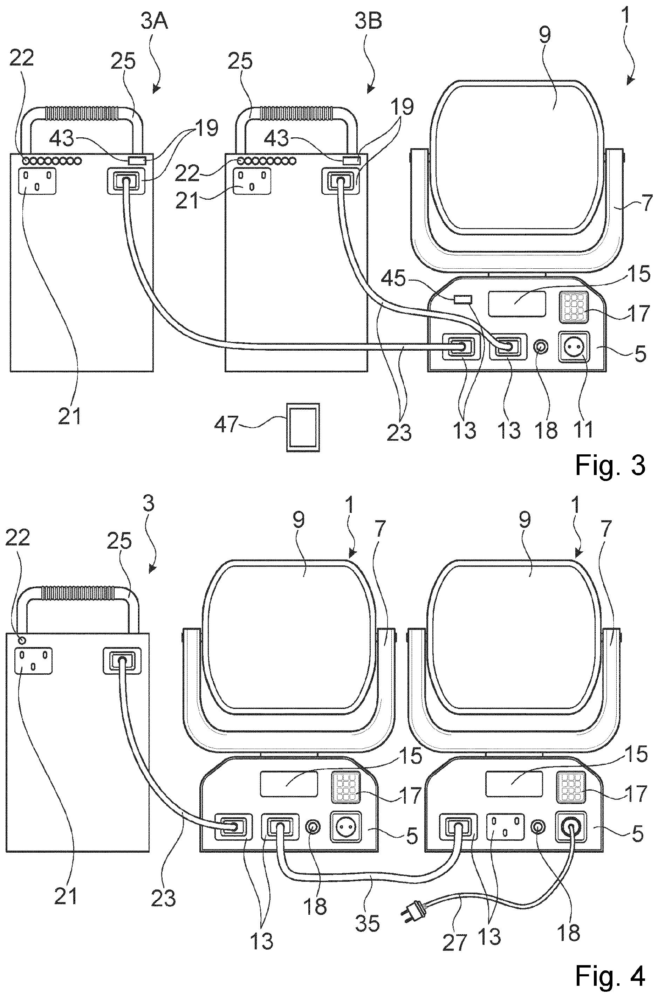

Figur 3 zeigt ein weiteres Ausführungsbeispiel eines Scheinwerfersystems. Die Beschreibung konzentriert sich auf Unterschiede zum zuvor beschriebenen Ausführungsbeispiel.

Der Scheinwerfer 1 weist eine weitere zweite Versorgungsschnittstelle 13 für eine weitere externe Akkumulatorversorgung auf.

Das Scheinwerfersystem umfasst zwei Akkumulatorvorrichtungen 3A, 3B, jeweils mit einer Akkumulatorschnittstelle 19 zur Bereitstellung der Versorgungsspannung für den Scheinwerfer 1 sowie einer weiteren Akkumulatorschnittstelle 21, die eine kaskadierte Verbindung mit weiteren Akkumulatorvorrichtungen ermöglicht. Die Akkumulatorvorrichtungen 3A, 3B sind jedoch nicht kaskadiert.

Die Akkumulatorschnittstellen 19 der Akkumulatorvorrichtungen 3A, 3B sind jeweils mittels einer Kabelverbindung 23 mit einer der zweiten Versorgungsschnittstellen 13 des Scheinwerfers 1 verbunden, sodass zwei unabhängige Akkumulatorversorgungen am Scheinwerfer 1 anliegen.

Das Vorsehen der weiteren zweiten Versorgungsschnittstelle 19 erlaubt während des Scheinwerferbetriebs eine der Akkumulatorvorrichtungen 3A, 3B, die nicht mehr ausreichend Versorgungsspannung bereitstellen kann, auszutauschen oder aufzuladen, ohne den Scheinwerferbetrieb zu unterbrechen, da die Energieversorgung von der anderen Akkumulatorvorrichtung 3A, 3B übernommen wird. Die entladene Akkumulatorvorrichtung 3A, 3B kann mittels einer Schnellladevorrichtung wieder aufgeladen werden, während die andere Akkumulatorvorrichtung 3A, 3B den Scheinwerfer 1 versorgt. Die aufgeladene Ackumulatorvorrichtung 3A, 3B übernimmt die Energieversorgung sobald die andere Akkumulatorvorrichtung 3A, 3B nicht mehr ausreichend Versorgungsspannung bereitstellen kann. Durch wiederholtes Aufladen der Akkumulatorvorrichtungen 3A, 3B lässt sich die Betriebsdauer des Scheinwerfers 1 verlängern, ohne die Notwendigkeit eine Vielzahl von Akkumulatorvorrichtungen dafür bereitzustellen, was eine deutliche Aufwandsreduktion für einen kontinuierlichen Scheinwerferbetrieb ist.

Die Signalisierungsvorrichtung 22 der Akkumulatorvorrichtungen 3A, 3B umfasst eine Mehrzahl von Leuchten, beispielsweise acht LEDS, die in einer Reihe angeordnet sind. Dies wird auch als LED-Band bezeichnet. Die Signalisierungsvorrichtung 22 ist ausgebildet, den Ladezustand anhand der Anzahl leuchtender LEDs anzuzeigen. Je mehr LEDs leuchten, desto höher ist der Ladezustand. Die Anzahl der LEDs kann mit der Anzahl der Gruppen von Akkumulatorzellen oder der Anzahl der Akkumulatorzellen korrespondieren, sodass jede LED Ausfall oder Defekt einer Gruppe beziehungsweise einer Akkumulatorzelle signalisieren kann.

Die Akkumulatorvorrichtungen 3A, 3B weisen jeweils ein Akkumulatorvorrichtung-Funkmodul 43 zur Datenkommunikation zwischen der Akkumulatorvorrichtung 3A, 3B und dem Scheinwerfer 1, untereinander und zu einem externen Überwachungsgerät 47 auf. Der Scheinwerfer 1 weist ein Scheinwerfer-Funkmodul 45 zur Datenkommunikation zwischen den Akkumulatorvorrichtungen 3A, 3B und dem Scheinwerfer 1 und zum externen Überwachungsgerät 47 auf.

Über die Schnittstellen 19, 13 der Akkumulatorvorrichtungen 3A, 3B beziehungsweise des Scheinwerfers 1 erfolgt auch die Kommunikation zwischen dem Scheinwerfer 1 und den Akkumulatorvorrichtungen 3A, 3B. Allerdings sind die zweite Versorgungsschnittstelle 13 und die Akkumulatorschnittstelle 19 ausgebildet, dass die Datenübertragung über das Scheinwerfer-Funkmodul 45 beziehungsweise das Akkumulatorvorrichtung-Funkmodul 43 erfolgt. Mit anderen Worten: Diese Schnittstellen nutzen die Funktionalität der Buchsen und der Funkmodule 43, 45. Die Energieversorgung erfolgt durch elektrisch leitende Kabelverbindungen 23.

Das externe Überwachungsgerät 47 kann beispielsweise als Tablet, Smartphone oder Lichtsteuerpult ausgebildet sein. Auf Smartphone oder Tablet ist eine geeignete Software (App) installiert. Das Überwachungsgerät 47 zeigt in erster Linie übermittelte Zustandsinformationen der Akkumulatorvorrichtungen 3A, 3B und des Scheinwerfers 1 an, kann aber auch zur Steuerung dieser Geräte verwendet werden, indem entsprechende Steuersignale an diese übermittelt werden. Mittels des Überwachungsgeräts 47 können ein oder mehrere Scheinwerfersysteme, die beabstandet voneinander positioniert sind, zentral fernüberwacht werden.

In diesem Ausführungsbeispiel erfolgt die Datenkommunikation zwischen den Akkumulatorvorrichtungen 3A, 3B, dem Scheinwerfer 1 und dem Überwachungsgerät 47 drahtlos, beispielsweise durch DMX/RDM, WLAN oder Bluetooth. Es können auch bedrahtete Scheinwerferschnittstellen und entsprechende Protokolle für die Datenkommunikation verwendet werden.

Figur 4 zeigt ein weiteres Ausführungsbeispiel eines Scheinwerfersystems. Die Beschreibung konzentriert sich auf Unterschiede zu den zuvor beschriebenen Ausführungsbeispielen.

In diesem Ausführungsbeispiel ist der Scheinwerfer 1 mit einem weiteren Scheinwerfer 1, der als Bühnen- oder Architekturscheinwerfer ausgebildet ist, koppelbar, sodass die Scheinwerfer 1 von derselben externen Akkumulatorversorgung gespeist werden können. Die Scheinwerfer 1 weisen jeweils eine weitere zweite Versorgungsschnittstelle 19 auf, die miteinander durch eine Kabelverbindung 35 oder andere geeignete Mittel verbunden sind, um die Scheinwerfer 1 zu koppeln. Die zweite Versorgungsschnittstelle 19 eines der beiden Scheinwerfer 1 ist mit der Akkumulatorvorrichtung 3 verbunden, die beide Scheinwerfer 1 versorgt. Nichtsdestotrotz ist alternativ die Energieversorgung beider Scheinwerfer 1 durch die erste Versorgungsschnittstelle 11 eines der Scheinwerfer 1 möglich, wie durch das Versorgungskabel 27 angedeutet ist. In einem solchen Betriebsmodus kann auch die Akkumulatorvorrichtung 3 über die Scheinwerfer 1 geladen werden.

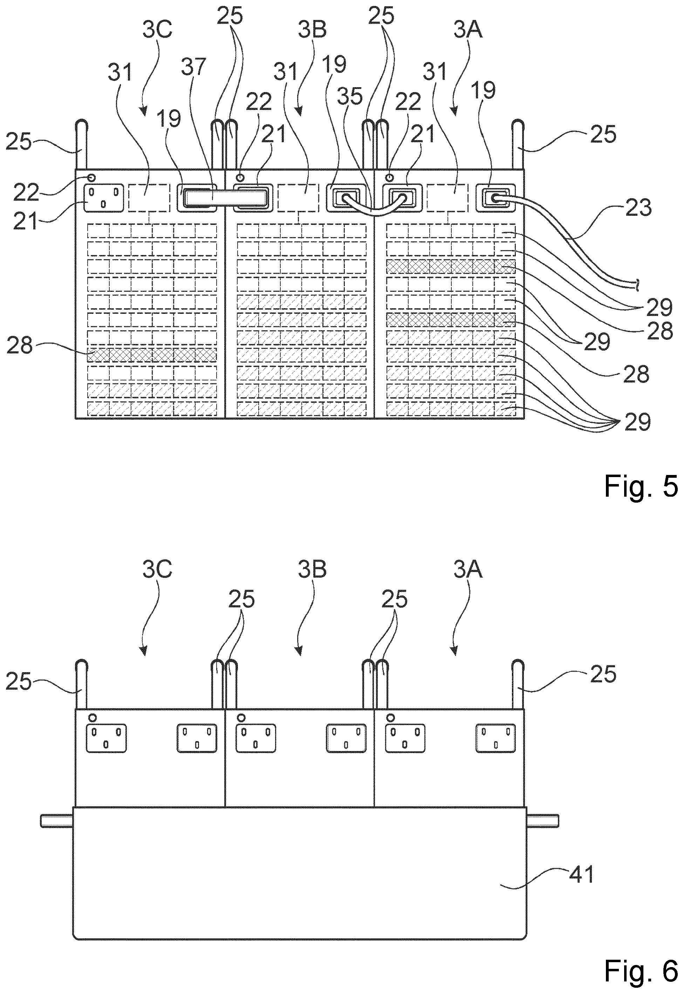

Figur 5 zeigt ein Ausführungsbeispiel einer Mehrzahl von Akkumulatorvorrichtungen 3A, 3B, 3C, mittels derer der Scheinwerfer 1 (in Figur 5 nicht dargestellt) in einem Scheinwerfersystem versorgt werden kann. Um Wiederholungen zu vermeiden, werden lediglich Unterschiede zu den vorangegangenen Ausführungsbeispielen beschrieben.

Beispielhaft sind eine erste, eine zweite und eine dritte Akkumulatorvorrichtung 3A, 3B, 3C dargestellt. In diesem Ausführungsbeispiel hat jede der Akkumulatorvorrichtungen 3A, 3B, 3C zwei Tragegriffe 25 an der Oberseiten des Gehäuses, was platzsparender ist als das vorherige Ausführungsbeispiel. Die erste Akkumulatorvorrichtung 3A ist mittels einer eingesteckten Kabelverbindung 23, wie zuvor beschrieben, mit dem Scheinwerfer 1 verbunden (in Figur 5 nicht dargestellt). Die Akkumulatorvorrichtungen 3A, 3B, 3C sind kaskadiert zusammengeschaltet. Die kaskadierten Akkumulatorvorrichtungen 3A, 3B, 3C sind hintereinandergeschaltet, sodass die erste mit der zweiten verbunden ist und die zweite mit der dritten verbunden ist. Diese Kaskadierung formt eine Akkumulatorvorrichtungskette und lässt sich für weitere Akkumulatorvorrichtungen fortsetzen. Die Verbindung zwischen den kaskadierten Akkumulatorvorrichtungen 3A, 3B, 3C kann durch kurze Kabelverbindungen 35 oder durch Steckerbrücken 37 erfolgen. Eine elektrisch leitende Verbindung zwischen der Akkumulatorschnittstelle 19 der zweiten Akkumulatorvorrichtung 3B mit der weiteren Akkumulatorschnittstelle 21 der ersten Akkumulatorvorrichtung 3A erfolgt in diesem Ausführungsbeispiel beispielhaft über eine Kabelverbindung 35 mit Steckern. Eine elektrisch leitende Verbindung zwischen der Akkumulatorschnittstelle 19 der dritten Akkumulatorvorrichtung 3C mit der weiteren Akkumulatorschnittstelle 21 des zweiten Akkumulators 3B erfolgt beispielhaft über ein festes Verbindungsstück mit Steckern, auch als Steckerbrücke 37 bezeichnet. Alternativ ist auch denkbar, dass die Akkumulatorvorrichtungen 3A, 3B, 3C Schnittstellen haben, die direkt ineinandergreifen, um die elektrisch leitende Verbindung herzustellen.

Defekte Gruppen von Akkumulatorzellen oder defekte Akkumulatorzellen 28 in der ersten und dritten Akkumulatorvorrichtung 3A, 3C sind in Figur 3 mit Kreuzschraffur markiert. Des Weiteren haben die Akkumulatorvorrichtungen 3A, 3B, 3C unterschiedliche Ladezustände, die durch eine andere Schraffur angedeutet sind.

Die Zustandsinformation der Akkumulatorvorrichtungen 3A, 3B, 3C werden durch deren Datenverarbeitungseinheiten 31 erfasst und der Datenverarbeitungseinheit 33 des Scheinwerfers 1 übermittelt. Dies kann beispielsweise im Rahmen eines geeigneten Master-Slave-Protokolls mit der Datenverarbeitungseinheit 33 des Scheinwerfers 1 als Master und den Datenverarbeitungseinheiten 31 der Akkumulatorvorrichtungen 3A, 3B, 3C als Slaves erfolgen. Jeder der Akkumulatorvorrichtungen 3A, 3B, 3C hat eine bei der Fertigung zugeordnete Identifikationsnummer, bei der eine eindeutige Zuordnung bei der Datenkommunikation möglich ist.

Anhand der Informationen über die Zustände der Akkumulatorvorrichtungen 3A, 3B, 3C ist deren gezielte Ansteuerung zur optimierten Energieversorgung des Scheinwerfers 1 möglich. Dabei kann der Scheinwerfer 1 die Energieversorgung beispielsweise derart steuern, dass die Akkumulatorvorrichtungen 3A, 3B, 3C nacheinander entladen werden. Alternativ kann die Energieversorgung auch gleichzeitig durch alle Akkumulatorvorrichtungen 3A, 3B, 3C erfolgen. Bei der Versorgung können unterschiedliche Ladestände der Akkumulatorvorrichtungen 3A, 3B, 3C beispielsweise dadurch berücksichtigt werden, dass die Entladung derart erfolgt, dass zunächst die Ladezustände aneinander angeglichen werden. Bevorzugt ist jedoch, dass die Akkumulatorvorrichtungen 3A, 3B, 3C nacheinander entladen werden, beginnend mit der Akkumulatorvorrichtung, die den niedrigsten Ladezustand hat.

Das Aufladen der Akkumulatorvorrichtungen 3A, 3B, 3C kann z. B. durch eine Autobatterie erfolgen. Natürlich kann das Aufladen auch durch die Netzversorgung mittels eines Netzteils oder eines Ladegeräts erfolgen. Das Aufladen der kaskadierten Akkumulatorvorrichtungen 3A, 3B, 3C erfolgt üblicherweise gleichzeitig. Die Datenverarbeitungseinheit 31 der Akkumulatorvorrichtungen überwacht und regelt sinnvollerweise den Aufladevorgang, sodass ein Überladen vermieden wird.

Tritt bei einer der Akkumulatorvorrichtungen 3A, 3B, 3C ein Fehler oder Defekt auf, wird dieses durch die Signalisierungsvorrichtung 22 angezeigt. Detailliertere Information darüber werden z. B. an der Anzeigevorrichtung 15 des Scheinwerfers 1 oder über dessen Datenschnittstelle 18 bereitgestellt.

Figur 6 zeigt ein weiteres Ausführungsbeispiel einer Mehrzahl von Akkumulatorvorrichtungen 3A, 3B, 3C, die jedoch noch nicht miteinander verbunden sind, sondern lediglich für den Transport vorbereitet wurden. Es ist eine Transportvorrichtung 41 für die Akkumulatorvorrichtungen 3A, 3B, 3C vorgesehen, die in diesem Ausführungsbeispiel wannenförmig mit zwei randseitigen Griffen ausgebildet ist. Alternative Ausgestaltungen einer solchen Transportvorrichtung für mehrere Akkumulatorvorrichtungen 3A, 3B, 3C sind beispielsweise Gestelle oder Körbe, mittels derer mehrere Akkumulatorvorrichtungen 3A, 3B, 3C getragen und transportiert werden können. Die Transportvorrichtung kann auch als Haltevorrichtung dienen, in der die Akkumulatorvorrichtungen 3A, 3B, 3C nach dem Aufbau des Scheinwerfersystems und während seines Betriebs positioniert sind. Solch eine Transport- und/oder Haltevorrichtung erleichtert den Transport und/oder die Positionierung der Akkumulatorvorrichtungen 3A, 3B, 3C.

Ein Ausführungsbeispiel einer Transportvorrichtung ist ein Flightcase. Solch ein Flightcase ist eine stabile Transportkiste mit aufklappbarem Deckel und Rollen, in dem mehrere Akkumulatorvorrichtungen 3A, 3B, 3C transportiert werden können. Durch Anschlüsse und Steckerleisten innerhalb der Kiste können die Akkumulatorvorrichtungen 3A, 3B, 3C in der Kiste kaskadiert miteinander verbunden werden, sodass sie beim Betrieb und Ladevorgang in der Kiste verbleiben können und lediglich noch der Anschluss des Scheinwerfers 1 erfolgen muss. In einem Ausführungsbeispiel ist eine Anschlussvorrichtung an der Kiste vorgesehen, der mit einer der Akkumulatorschnittstellen 19 der kaskadierten Akkumulatorvorrichtungen 3A, 3B, 3C verbunden ist und als Schnittstelle zum Anschluss des Scheinwerfers 1 oder zum Aufladen und Prüfen der Akkumulatorvorrichtungen 3A, 3B, 3C in der Kiste dient. Das gleichzeitige Prüfen der Ackumulatorvorrichtungen 3A, 3B, 3C in der Kiste hinsichtlich Funktionalität und Ladezustand ist über die Schnittstelle an der Kiste möglich. Eventuelle Fehlermeldungen können anhand der Signalisierungsvorrichtung 22 der betroffenen Akkumulatorvorrichtung in einfacher Weise zugeordnet werden.

Natürlich ist es auch möglich, mit einer oder mehreren Akkumulatorvorrichtungen wie zuvor beschrieben, nicht nur einen, sondern mehrere Scheinwerfer zu versorgen, die in geeigneter Weise, beispielsweise kaskadiert, miteinander verbunden sind und angesteuert werden.

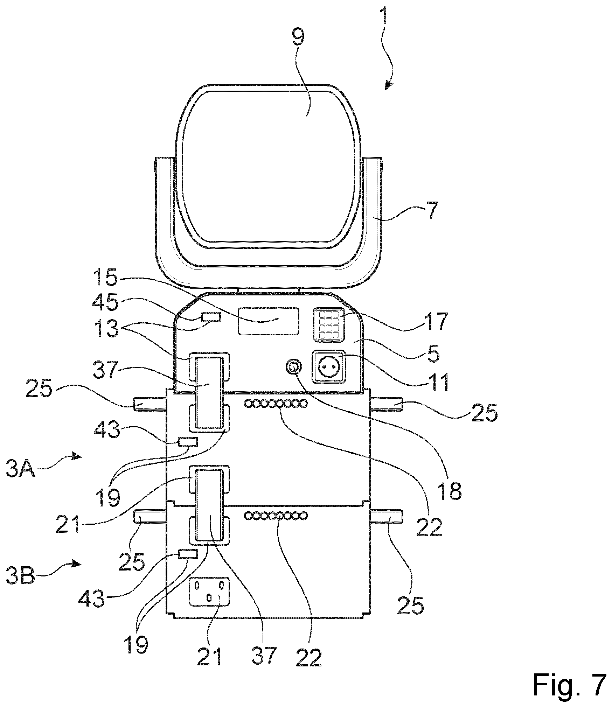

Figur 7 zeigt ein weiteres Ausführungsbeispiel eines Scheinwerfersystems. Die Beschreibung konzentriert sich auf Unterschiede zu den zuvor beschriebenen Ausführungsbeispielen.

Das Scheinwerfersystem umfasst einen Scheinwerfer 1 und zwei kaskadierte Akkumulatorvorrichtungen 3A, 3B in einer Akkumulatorvorrichtungskette. Die Akkumulatorvorrichtungen 3A, 3B sind übereinander stapelbar. Der Scheinwerfer 1 ist auf einer solchen Akkumulatorvorrichtung 3A, 3B stapelbar. Im dargestellten Scheinwerfersystem sind die Akkumulatorvorrichtungen 3A, 3B aufeinandergestapelt und der Scheinwerfer 1 auf der oberen Akkumulatorvorrichtung platziert, sodass sich ein Stapel als platzsparende und kompakte Anordnung ergibt. In einem Ausführungsbeispiel sind der Scheinwerfer 1 und die Akkumulatorvorrichtungen 3A, 3B als Stapel verriegelbar, sodass das Scheinwerfersystem hängend betrieben werden kann.

Die Ober- und Unterseite der Akkumulatorvorrichtungen 3A, 3B sowie die Unterseite des Scheinwerfers 1 sind so geformt, dass sie sich vorteilhafterweise formschlüssig aufeinandersetzen lassen, beispielsweise indem bei gestapelten Komponenten Erhöhungen einer Komponente in korrespondierenden Aussparungen der anderen Komponente eingreifen.

Die Akkumulatorvorrichtungen 3A, 3B sind so ausgeführt, dass sie unter den Scheinwerfer 1 gestellt werden können. Ihre Grundflächen korrespondieren mit der des Scheinwerfers 1 und sind beispielhaft ca. 300mm x 300mm groß. Eine beispielhafte Höhe der Akkumulatorvorrichtungen 3A, 3B beträgt ca. 120mm. Somit lassen sich die Akkumulatorvorrichtungen 3A, 3B unauffällig und bei Bedarf auch gestapelt unter dem Scheinwerfer 1 positionieren. Die Akkumulatorvorrichtungen 3A, 3B sind derart ausgebildet, dass verschiedene Scheinwerfertypen auf ihnen stapelbar sind. Die Grundflächen und formschlüssigen Verbindungen sind abgestimmt auf mehrere zu verwendende Scheinwerfertypen.

Der Scheinwerfer 1 und die Akkumulatorvorrichtungen 3A, 3B sind mittels Steckbrücken 37 miteinander verbunden. Deshalb sind die Akkumulatorschnittstelle 19 und die weitere Akkumulatorschnittstelle 21 untereinander angeordnet.

Andere Mittel, beispielsweise eine Kabelverbindung, sind ebenfalls zur Verbindung geeignet. Bei solchen Ausführungsbeispielen können die Akkumulatorschnittstelle 19 und die weitere Akkumulatorschnittstelle 21, wie auch bei den zuvor gezeigten Ausführungsbeispielen, nebeneinander angeordnet sein.

Auch bei diesem Ausführungsbeispiel sind Akkumulatorvorrichtung-Funkmodule 43 und ein Scheinwerfer-Funkmodul 45 vorgesehen, die eine drahtlose Datenübertragung ermöglichen. Die zweite Versorgungsschnittstelle 13 und die Ackumulatorschnittstelle 19 sind ausgebildet, dass die Datenübertragung über das Scheinwerfer-Funkmodul 45 beziehungsweise das Akkumulatorvorrichtung-Funkmodul 43 erfolgt. Die Energieversorgung erfolgt durch eine elektrisch leitende Verbindung, in diesem Fall durch die Steckerbrücke 37.

Die vorstehend und die in den Ansprüchen angegebenen sowie die den Abbildungen entnehmbaren Merkmale sind sowohl einzeln als auch in verschiedener Kombination vorteilhaft realisierbar. Die Erfindung ist nicht auf die beschriebenen Ausführungsbeispiele beschränkt, sondern im Rahmen fachmännischen Könnens in mancherlei Weise abwandelbar.

### Bezugszeichen

- 1: Scheinwerfer
- 3, 3A, 3B, 3C: Akkumulator
- 5: Sockel
- 7: Bügel
- 9: Kopf
- 11: erste Versorgungsschnittstelle
- 13: zweite Versorgungsschnittstelle
- 15: Anzeigevorrichtung
- 17: Benutzerschnittstelle
- 18: Datenschnittstelle
- 19: Akkumulatorschnittstelle
- 21: weitere Akkumulatorschnittstelle
- 22: Signalisierungsvorrichtung
- 23, 35: Kabelverbindung
- 25: Tragegriff
- 27: Versorgungskabel
- 28, 29: Akkumulatorzelle
- 31, 33: Datenverarbeitungseinheit
- 37: Steckerbrücke
- 41: Tragevorrichtung
- 43: Akkumulatorvorrichtung-Funkmodul
- 45: Scheinwerfer-Funkmodul
- 47: Überwachungsgerät

## Patentansprüche

1. Scheinwerfersystem mit
einem Scheinwerfer (1) ausgebildet als Bühnen- oder Architekturscheinwerfer, der mindestens eine erste Versorgungsschnittstelle (11) für eine externe Netzversorgung und mindestens eine zweite Versorgungsschnittstelle (13) für eine externe Akkumulatorversorgung aufweist, und
einer externen Akkumulatorvorrichtung (3, 3A, 3B, 3C) mit mindestens einer Akkumulatorschnittstelle (19, 21) zur Bereitstellung einer Versorgungsspannung für den Scheinwerfer (1), wobei die Akkumulatorschnittstelle (19, 21) mit der zweiten Versorgungsschnittstelle (13) verbindbar oder verbunden ist,
wobei die zweite Versorgungsschnittstelle (13) und die Akkumulatorschnittstelle (19, 21) zu einer Datenkommunikation von der Akkumulatorvorrichtung (3, 3A, 3B, 3C) zum Scheinwerfer (1) ausgebildet sind.

2. Scheinwerfersystem nach Anspruch 1,
wobei die die zweite Versorgungsschnittstelle (13) und die Akkumulatorschnittstelle (19, 21) zu einer bidirektionalen Datenkommunikation zwischen der Ackumulatorvorrichtung (3, 3A, 3B, 3C) und dem Scheinwerfer (1) ausgebildet sind.

3. Scheinwerfersystem nach Anspruch 1 oder 2,
wobei der Scheinwerfer (1) ausgebildet ist, zwischen der Netzversorgung mittels der ersten Versorgungsschnittstelle (11) und der Akkumulatorversorgung mittels der zweiten Versorgungsschnittstelle (13) umzuschalten.

4. Scheinwerfersystem nach einem der vorhergehenden Ansprüche,
wobei an den zweiten Versorgungsschnittstellen (13) des Scheinwerfers (1) jeweils eine externe Akkumulatorversorgung anschließbar ist.

5. Scheinwerfersystem nach einem der vorhergehenden Ansprüche,
wobei der Scheinwerfer (1) mit zumindest einem weiteren Scheinwerfer (1) ausgebildet als Bühnen- oder Architekturscheinwerfer koppelbar ist, sodass die Scheinwerfer (1) von derselben externen Akkumulatorversorgung versorgbar sind.

6. Scheinwerfersystem nach einem der vorhergehenden Ansprüche,
wobei an den Akkumulatorschnittstellen (19, 21) jeweils entweder ein Scheinwerfer (1) oder eine weitere Akkumulatorvorrichtung (3, 3A, 3B, 3C) anschließbar ist.

7. Scheinwerfersystem nach einem der vorhergehenden Ansprüche,
wobei die Akkumulatorvorrichtung (3, 3A, 3B, 3C) eine aus einer Mehrzahl von Akkumulatorvorrichtungen (3A, 3B, 3C) ist, die kaskadiert miteinander verbindbar oder verbunden sind und die Akkumulatorschnittstellen (19, 21) zu einer Datenkommunikation zwischen den Akkumulatorvorrichtungen (3, 3A, 3B, 3C) ausgebildet sind.

8. Scheinwerfersystem nach einem der vorhergehenden Ansprüche,
wobei an die erste Versorgungsschnittstelle (11) eine Netzspannung anlegbar ist, die größer ist als die von der Akkumulatorvorrichtung (3, 3A, 3B, 3C) oder von der Mehrzahl von Akkumulatorvorrichtungen (3A, 3B, 3C) bereitgestellte Versorgungsspannung, die an der zweiten Versorgungsschnittstelle (13) anlegbar ist.

9. Scheinwerfersystem nach einem der vorhergehenden Ansprüche,
wobei die Akkumulatorvorrichtung (3, 3A, 3B, 3C) als Nickel-Metallhydrid-Akkumulatorvorrichtung ausgebildet ist.

10. Scheinwerfersystem nach einem der vorhergehenden Ansprüche,
wobei die Akkumulatorvorrichtung (3, 3A, 3B, 3C) ein Akkumulatorvorrichtung-Funkmodul (43) ausgebildet zur Datenkommunikation von der Akkumulatorvorrichtung (3, 3A, 3B, 3C) zum Scheinwerfer (1) und/oder zu einem externen Überwachungsgerät (47) und/oder zu einer weiteren Akkumulatorvorrichtung (3, 3A, 3B, 3C) aufweist,
und/oder wobei der Scheinwerfer (1) ein Scheinwerfer-Funkmodul (45) ausgebildet zur Datenkommunikation von der Akkumulatorvorrichtung (3, 3A, 3B, 3C) zum Scheinwerfer (1) und/oder zum externen Überwachungsgerät (47) aufweist.

11. Scheinwerfersystem nach einem der Ansprüche 7 bis 10,
wobei die Datenkommunikation die Bereitstellung von Zustandsinformation über die Akkumulatorvorrichtung (3, 3A, 3B, 3C) oder die Mehrzahl von Akkumulatorvorrichtungen (3A, 3B, 3C) umfasst.

12. Scheinwerfersystem nach Anspruch 11,
wobei die Zustandsinformation den Ladezustand der Akkumulatorvorrichtung (3, 3A, 3B, 3C) oder die Ladezustände der Mehrzahl von Akkumulatorvorrichtungen (3A, 3B, 3C) und/oder Informationen über Defekte oder Fehlern in der Akkumulatorvorrichtung (3, 3A, 3B, 3C) oder in der Mehrzahl von Akkumulatorvorrichtungen (3A, 3B, 3C) umfasst.

13. Scheinwerfersystem nach Anspruch 11 oder 12,
wobei die Akkumulatorvorrichtung (3, 3A, 3B, 3C) eine Signalisierungsvorrichtung (22) für die Zustandsinformation umfasst.

14. Scheinwerfersystem nach einem der Ansprüche 11 bis 13,
wobei der Scheinwerfer (1) eine Benutzerschnittstelle (17) für die Ansteuerung des Scheinwerfers (1) umfasst
und/oder wobei der Scheinwerfer (1) eine Anzeigevorrichtung (15) für die Ausgabe der Zustandsinformation und/oder eine Datenschnittstelle (18) für die Bereitstellung der Zustandsinformation umfasst.

15. Scheinwerfersystem nach einem der vorhergehenden Ansprüche,
wobei die Akkumulatorvorrichtung (3, 3A, 3B, 3C) eine Datenverarbeitungseinheit (31) umfasst, die zur Überwachung des Akkumulatorzustands und zur Kommunikation mit einer Datenverarbeitungseinheit (33) des Scheinwerfers (1) und/oder zur Kommunikation mit einer weiteren Akkumulatorvorrichtung (3, 3A, 3B, 3C) ausgebildet ist.

16. Scheinwerfersystem nach einem der Ansprüche 7 bis 15,
wobei der Scheinwerfer (1) ausgebildet ist, die Akkumulatorvorrichtung (3, 3A, 3B, 3C) oder die Mehrzahl von Akkumulatorvorrichtungen (3A, 3B, 3C) zu steuern.

17. Scheinwerfersystem nach einem der Ansprüche 7 bis 16,
ferner umfassend eine Haltevorrichtung (41) für die Mehrzahl der Akkumulatorvorrichtungen (3A, 3B, 3C) und/oder eine Trage- oder Transportvorrichtung (25, 41) für die Akkumulatorvorrichtung (3, 3A, 3B, 3C) oder die Mehrzahl der Ackumulatorvorrichtungen (3A, 3B, 3C).

18. Scheinwerfersystem nach einem der vorhergehenden Ansprüche,
wobei die Akkumulatorvorrichtung (3, 3A, 3B, 3C) ausgebildet ist, sodass sie auf eine weitere Akkumulatorvorrichtung (3, 3A, 3B, 3C) stapelbar ist und/oder wobei der Scheinwerfer (1) ausgebildet ist, sodass er auf der Akkumulatorvorrichtung (3, 3A, 3B, 3C) stapelbar ist.

## Claims

1. A spotlight system, comprising
a spotlight (1) configured as a stage or architectural spotlight, which comprises at least one first supply interface (11) for an external mains supply and at least one second supply interface (13) for an external storage battery supply, and
an external storage battery device (3, 3A, 3B, 3C) comprising at least one storage battery interface (19, 21) for providing a supply voltage for the spotlight (1), wherein the storage battery interface (19, 21) is or can be connected to the second supply interface (13),
wherein the second supply interface (13) and the storage battery interface (19, 21) are configured for data communication from the storage battery device (3, 3A, 3B, 3C) to the spotlight (1).

2. The spotlight system according to claim 1,
wherein the second supply interface (13) and the storage battery interface (19, 21) are configured for bidirectional data communication between the storage battery device (3, 3A, 3B, 3C) and the spotlight (1).

3. The spotlight system according to either claim 1 or claim 2,
wherein the spotlight (1) is configured to switch between the mains supply by means of the first supply interface (11) and the storage battery supply by means of the second supply interface (13).

4. The spotlight system according to any of the preceding claims,
wherein an external storage battery supply can be connected to each of the second supply interfaces (13) of the spotlight (1).

5. The spotlight system according to any of the preceding claims,
wherein the spotlight (1) can be coupled to at least one further spotlight (1) configured as a stage or architectural spotlight, such that the spotlights (1) can be supplied by the same external storage battery supply.

6. The spotlight system according to any of the preceding claims,
wherein either a spotlight (1) or a further storage battery device (3, 3A, 3B, 3C) can be connected to the storage battery interfaces (19, 21).

7. The spotlight system according to any of the preceding claims,
wherein the storage battery device (3, 3A, 3B, 3C) is one of a plurality of storage battery devices (3A, 3B, 3C) which are or can be cascade-connected to one another and the storage battery interfaces (19, 21) are configured for data communication between the storage battery devices (3, 3A, 3B, 3C).

8. The spotlight system according to any of the preceding claims,
wherein a mains voltage can be applied to the first supply interface (11), said voltage being greater than the supply voltage that is provided by the storage battery device (3, 3A, 3B, 3C) or by the plurality of storage battery devices (3A, 3B, 3C) and that can be applied to the second supply interface (13).

9. The spotlight system according to any of the preceding claims, wherein the storage battery device (3, 3A, 3B, 3C) is a nickel-metal hydride storage battery device.

10. The spotlight system according to any of the preceding claims,
wherein the storage battery device (3, 3A, 3B, 3C) comprises a storage battery device radio module (43) configured for data communication from the storage battery device (3, 3A, 3B, 3C) to the spotlight (1) and/or to an external monitoring device (47) and/or to a further storage battery device (3, 3A, 3B, 3C),
and/or wherein the spotlight (1) comprises a spotlight radio module (45) configured for data communication from the storage battery device (3, 3A, 3B, 3C) to the spotlight (1) and/or to the external monitoring device (47).

11. The spotlight system according to any of claims 7 to 10,
wherein the data communication comprises the provision of state information about the storage battery device (3, 3A, 3B, 3C) or the plurality of storage battery devices (3A, 3B, 3C).

12. The spotlight system according to claim 11,
wherein the state information comprises the state of charge of the storage battery device (3, 3A, 3B, 3C) or the states of charge of the plurality of storage battery devices (3A, 3B, 3C) and/or information about defects or faults in the storage battery device (3, 3A, 3B, 3C) or in the plurality of storage battery devices (3A, 3B, 3C).

13. The spotlight system according to either claim 11 or claim 12,
wherein the storage battery device (3, 3A, 3B, 3C) comprises a signaling device (22) for the state information.

14. The spotlight system according to any of claims 11 to 13,
wherein the spotlight (1) comprises a user interface (17) for controlling the spotlight (1)
and/or wherein the spotlight (1) comprises a display device (15) for outputting the state information and/or a data interface (18) for providing the state information.

15. The spotlight system according to any of the preceding claims,
wherein the storage battery device (3, 3A, 3B, 3C) comprises a data processing unit (31) which is configured to monitor the storage battery state and to communicate with a data processing unit (33) of the spotlight (1) and/or to communicate with a further storage battery device (3, 3A, 3B, 3C).

16. The spotlight system according to any of claims 7 to 15,
wherein the spotlight (1) is configured to control the storage battery device (3, 3A, 3B, 3C) or the plurality of storage battery devices (3A, 3B, 3C).

17. The spotlight system according to any of claims 7 to 16, further comprising a holding device (41) for the plurality of storage battery devices (3A, 3B, 3C) and/or a carrying or transporting device (25, 41) for the storage battery device (3, 3A, 3B, 3C) or the plurality of storage battery devices (3A, 3B, 3C).

18. The spotlight system according to any of the preceding claims,
wherein the storage battery device (3, 3A, 3B, 3C) is configured such that it can be stacked on another storage battery device (3, 3A, 3B, 3C) and/or wherein the spotlight (1) is configured such that it can be stacked on the storage battery device (3, 3A, 3B, 3C).

## Revendications

1. Système à projecteur comportant
un projecteur (1) conçu comme projecteur scénique ou projecteur architectural qui présente au moins une première interface d'alimentation (11) pour une alimentation externe par secteur et au moins une seconde interface d'alimentation (13) pour une alimentation externe par accumulateur, et
un dispositif accumulateur (3, 3A, 3B, 3C) externe comportant au moins une interface d'accumulateur (19, 21) pour la fourniture d'une tension d'alimentation pour le projecteur (1), dans lequel l'interface d'accumulateur (19, 21) peut être connectée ou est connectée à la seconde interface d'alimentation (13),
dans lequel la seconde interface d'alimentation (13) et l'interface d'accumulateur (19, 21) sont configurées pour une communication de données du dispositif accumulateur (3, 3A, 3B, 3C) au projecteur (1).

2. Système à projecteur selon la revendication 1,
dans lequel la seconde interface d'alimentation (13) et l'interface d'accumulateur (19, 21) sont configurées pour une communication de données bidirectionnelle entre le dispositif accumulateur (3, 3A, 3B, 3C) et le projecteur (1).

3. Système à projecteur selon la revendication 1 ou 2,
dans lequel le projecteur (1) est configuré pour commuter entre l'alimentation par secteur au moyen de la première interface d'alimentation (11) et l'alimentation par accumulateur au moyen de la seconde interface d'alimentation (13).

4. Système à projecteur selon l'une des revendications précédentes,
dans lequel respectivement une alimentation externe par accumulateur peut être raccordée aux secondes interfaces d'alimentation (13) du projecteur (1).

5. Système à projecteur selon l'une des revendications précédentes,
dans lequel le projecteur (1) peut être accouplé à au moins un autre projecteur (1) conçu comme projecteur scénique ou projecteur architectural, de sorte que les projecteurs (1) peuvent être alimentés par la même alimentation externe par accumulateur.

6. Système à projecteur selon l'une des revendications précédentes,
dans lequel respectivement un projecteur (1) ou un autre dispositif accumulateur (3, 3A, 3B, 3C) peut être raccordé aux interfaces d'accumulateur (19, 21).

7. Système à projecteur selon l'une des revendications précédentes,
dans lequel le dispositif accumulateur (3, 3A, 3B, 3C) est un dispositif accumulateur parmi une pluralité de dispositifs accumulateurs (3A, 3B, 3C) qui peuvent être connectés ou sont connectés en cascade les uns aux autres et les interfaces d'accumulateurs (19, 21) sont configurées pour une communication de données entre les dispositifs accumulateurs (3, 3A, 3B, 3C).

8. Système à projecteur selon l'une des revendications précédentes,
dans lequel une tension de réseau peut être appliquée à la première interface d'alimentation (11), laquelle tension de réseau est supérieure à la tension d'alimentation fournie par le dispositif accumulateur (3, 3A, 3B, 3C) ou par la pluralité de dispositifs accumulateurs (3A, 3B, 3C) et pouvant être appliquée à la seconde interface d'alimentation (13).

9. Système à projecteur selon l'une des revendications précédentes, dans lequel le dispositif accumulateur (3, 3A, 3B, 3C) est un dispositif accumulateur à base de nickel-hydrure métallique.

10. Système à projecteur selon l'une des revendications précédentes,
dans lequel le dispositif accumulateur (3, 3A, 3B, 3C) présente un module radio de dispositif accumulateur (43) configuré pour la communication de données du dispositif accumulateur (3, 3A, 3B, 3C) vers le projecteur (1) et/ou vers un appareil de surveillance externe (47) et/ou vers un autre dispositif accumulateur (3, 3A, 3B, 3C),
et/ou dans lequel le projecteur (1) présente un module radio de projecteur (45) configuré pour la communication de données du dispositif accumulateur (3, 3A, 3B, 3C) au projecteur (1) et/ou à l'appareil de surveillance externe (47).

11. Système à projecteur selon l'une des revendications 7 à 10,
dans lequel la communication de données comprend la fourniture d'informations d'état concernant le dispositif accumulateur (3, 3A, 3B, 3C) ou la pluralité de dispositifs accumulateurs (3A, 3B, 3C).

12. Système à projecteur selon la revendication 11,
dans lequel les informations d'état comprennent l'état de charge du dispositif accumulateur (3, 3A, 3B, 3C) ou les états de charge de la pluralité de dispositifs accumulateurs (3A, 3B, 3C) et/ou des informations concernant des défauts ou des erreurs dans le dispositif accumulateur (3, 3A, 3B, 3C) ou dans la pluralité de dispositifs accumulateurs (3A, 3B, 3C).

13. Système à projecteur selon la revendication 11 ou 12,
dans lequel le dispositif accumulateur (3, 3A, 3B, 3C) comprend un dispositif de signalisation (22) pour les informations d'état.

14. Système à projecteur selon l'une des revendications 11 à 13,
dans lequel le projecteur (1) comprend une interface utilisateur (17) pour la commande du projecteur (1)
et/ou dans lequel le projecteur (1) comprend un dispositif d'affichage (15) pour la sortie des informations d'état et/ou une interface de données (18) pour la fourniture des informations d'état.

15. Système à projecteur selon l'une des revendications précédentes,
dans lequel le dispositif accumulateur (3, 3A, 3B, 3C) comprend une unité de traitement de données (31) qui est configurée pour surveiller l'état de l'accumulateur et pour communiquer avec une unité de traitement de données (33) du projecteur (1) et/ou pour communiquer avec un autre dispositif accumulateur (3, 3A, 3B, 3C).

16. Système à projecteur selon l'une des revendications 7 à 15,
dans lequel le projecteur (1) est configuré pour commander le dispositif accumulateur (3, 3A, 3B, 3C) ou la pluralité de dispositifs accumulateurs (3A, 3B, 3C).

17. Système à projecteur selon l'une des revendications 7 à 16, comprenant en outre un dispositif de maintien (41) pour la pluralité de dispositifs accumulateurs (3A, 3B, 3C) et/ou un dispositif de support ou de transport (25, 41) pour le dispositif accumulateur (3, 3A, 3B, 3C) ou la pluralité de dispositifs accumulateurs (3A, 3B, 3C).

18. Système à projecteur selon l'une des revendications précédentes,
dans lequel le dispositif accumulateur (3, 3A, 3B, 3C) est conçu de sorte qu'il peut être empilé sur un autre dispositif accumulateur (3, 3A, 3B, 3C) et/ou dans lequel le projecteur (1) est conçu de sorte qu'il peut être empilé sur le dispositif accumulateur (3, 3A, 3B, 3C).
